Europäisches Patentamt

(19) European Patent Office

Office européen des brevets

(11) Veröffentlichungsnummer: **0 275 818**
**B1**

(12) **EUROPÄISCHE PATENTSCHRIFT**

(45) Veröffentlichungstag der Patentschrift:
27.12.89

(21) Anmeldenummer: **87810504.8**

(22) Anmeldetag: **02.09.87**

(51) Int. Cl.⁴: **F16H 13/08**

(30) Priorität: **02.01.87 DE 3700053**

(43) Veröffentlichungstag der Anmeldung:
**27.07.88 Patentblatt 88/30**

(45) Bekanntmachung des Hinweises auf die Patenterteilung:
**27.12.89 Patentblatt 89/52**

(84) Benannte Vertragsstaaten:
**AT BE CH DE ES FR GB GR IT LI LU NL SE**

(56) Entgegenhaltungen:
**DK-C- 26 456**
**GB-A- 1 192 361**

㊴ Spielfreies, umschaltbares Reibungs-Wendegetriebe.

(73) Patentinhaber: **Erowa AG, Winkelstrasse 8,
CH-5734 Reinach(CH)**

(72) Erfinder: **Schneider, Rudolf, Gondiswinkel,
CH-5734 Reinach(CH)**

(74) Vertreter: **Rottmann, Maximilian R. et al, c/o Rottmann,
Quehl & Zimmermann AG Glattalstrasse 37,
CH-8052 Zürich(CH)**

## Beschreibung

Die vorliegende Erfindung bezieht sich auf ein speilfreies Präzisions-Wendegetriebe mit einem drehbar gelagerten Antriebsglied und einem koaxial angeordneten, drehbar gelagerten Abtriebsglied, auf die Verwendung dieses Wendegetriebes als Verstellantrieb für eine linear verschiebbar gelagerte Meßschiene sowie auf eine Antriebsvorrichtung für das Verstellen einer linear verschiebbar gelagerten Meßschiene, welche ein erfindungsgemässes Präzisions-Wendegetriebe aufweist.

Als Wendegetriebe, d.h. als Getriebe zur Drehsinn-Umkehr einer Rotationsbewegung, werden im allgemeinen Zahnradgetriebe verwendet. Wenn An- und Abtriebsglied, z.B. eine zu einer Rotation angetriebene Eingangswelle und eine zu umgekehrter Rotation angetriebene Ausgangswelle, koaxial angeordnet sein sollen, bietet sich ein Planetengetriebe an. Diese Zahnradgetriebe sind robust und, je nach Dimensionierung, zur Übertragung hoher Drehmomente geeignet. Nachteilig ist aber, dass die Zahnräder ausserordentlich präzise gefertigt werden müssen, soll eine einigermassen spielarme Kraftübertragung erfolgen. Ausserdem unterliegen die miteinander kämmenden Zahnräder einem Verschleiss, wodurch wiederum Übertragungsspiel entsteht.

Ferner sind Reibrad-Wendegetriebe bekannt, bei denen sich ein Übertragungsspiel weitgehend ausschalten lässt. Nachteilig ist hierbei aber deren komplizierter und mithin kostspieliger Aufbau, falls diese genügend präzise arbeiten sollen.

Aus der GB-PS 1 192 361 entsprechend dem Oberbegriff von Anspruch 1 ist ein in einem Rasenmäher-Antrieb integriertes, in erster Linie als ein- und ausrückbare Kupplung dienendes Reibungsgetriebe bekannt geworden, das ein erstes, drehbares Element und ein zweites, koaxiales, drehbares Element aufweist, zwischen deren zueinander gerichteten Triebflächen, zur Kraftübertragung und gegebennenfalls zur Untersetzung und Drehrichtungsumkehr, ein Zwischenglied angeordnet ist, das käfiggeführte Kugeln aufweist, die sich auf den genannten Triebflächen abwälzen. Der Reibschluss zwischen Triebflächen und Kugeln ist dadurch sichergestellt, dass die Triebflächen unter Federkraft gegeneinander und damit gegen die Kugeln gepresst werden. Wenn das erste drehbare Element als Antriebsglied eingesetzt, das zweite drehbare Element bezüglich seiner Drehbewegung blockiert und das Zwischenglied als Abtriebsglied eingesetzt wird, erfolgt eine Drehrichtungsumkehr zwischen Antriebs- und Abriebsglied mit einer Untersetzung bzw. einer Drehmomentverstärkung um den Faktor 2. Wenn andererseits, bei sonst gleichen Voraussetzungen, das Zwischenglied blockiert und das zweite drehbare Element als Abtriebsglied eingesetzt wird, erfolgt eine Drehrichtungsumkehr zwischen Antriebs- und Abtriebsglied ohne Untersetzung bzw. Drehmomentverstärkung.

Eine solche Kupplung bzw. ein solches Getriebe ist zwar einfach im Aufbau, platzsparend sowie weitgehend spiel- und wartungsfrei, bietet aber lediglich die Möglichkeit der Übersetzungsänderung um den Faktor 2, wenn keine weitergehenden, aufwendigen konstruktiven Massnahmen getroffen werden.

Insbesondere in einer Antriebsvorrichtung für das Verstellen einer linear verschiebbar gelagerten Meßschiene, wie sie in manchen Präzisionsmesseinrichtungen verwendet wird, ist es oft aus konstruktiven Gründen erforderlich, den Drehsinn umzukehren, um eine gefühlsmässig logische Betätigung der Antriebsvorrichtung zu gewährleisten, und gleichzeitig die Möglichkeit der Umschaltung des Übersetzungsverhältnisses zwischen Antriebs- und Abtriebsglied um einen vergleichsweise hohen Faktor zu haben, wobei ein solches Getriebe klein, verschleiss- und spielfrei sowie wartungsarm sein soll.

Es ist demnach die Aufgabe der Erfindung, ein gattungsgemässes Getriebe derart weiterzubilden, dass die vorteilhaften Eigenschaften wie einfacher Aufbau, geringe Anfälligkeit für Verschleiss, Spielfreiheit und geringe Wartung beibehalten werden, das Übersetzungsverhältnis aber sehr einfach um einen Faktor wesentlich grösser als 2 geändert werden kann.

Diese Aufgabe wird bei einem Reibungsgetriebe der im Oberbegriff des Patentanspruches 1 genannten Art durch die im Kennzeichen dieses Anspruches definierten Merkmale gelöst. Weitere Einzelheiten und bevorzugte Ausbildungen des Erfindungsgegenstandes sind in den abhängigen Ansprüchen 2 bis 7 umschrieben.

Das erfindungsgemässe Wendegetriebe kann mit Vorteil in der zuvor erläuterten Antriebsvorrichtung für das Verstellen der linear verschiebbar gelagerten Meßschiene Anwendung finden, wie sie in Präzisionsmesseinrichtungen verwendet wird. Die Antriebsvorrichtung zeichnet sich gemäss der Erfindung dadurch aus, dass das Antriebsglied mit einem exzentrisch angeordneten, vorstehenden Betätigungszapfen für die manuelle Rotation des Antriebsgliedes versehen ist, und das wahlweise ein- und auskuppelbare Betätigungsmittel zum direkten, untersetzten Antrieb des Abtriebsgliedes vorgesehen sind, wobei die ein- und auskuppelbaren Betätigungsmittel eine drehbar gelagerte Treibspindel mit konischer Spitze aufweisen, welche mit einer äusseren Kante des Abtriebsgliedes in Reibschlussverbindung bringbar ist. Weiterhin kann die Treibspindel senkrecht zur Achse des Wendegetriebes verschiebbar gelagert sein. Wenn dann noch die Treibspindel in eingekuppelter Lage unter Wirkung einer Feder steht, welche die konische Spitze gegen das Abtriebsglied presst, ist auf einfache Art ein Feinverstellantrieb geschaffen, der nach Bedarf zur Feinverstellung der Meßschiene einsetzbar ist.

Im folgenden wird ein Ausführungsbeispiel des Erfindungsgegenstandes, unter Bezugnahme auf die beiliegenden Zeichnungen, näher erläutert. In den Zeichnungen zeigen:

Fig. 1 einen Vertikalschnitt durch ein erfindungsgemässes Präzisions-Wendegetriebe,

Fig. 2 eine Vorderansicht des Getriebes von Fig.1,

Fig. 3 eine perspektivische Detailansicht der Käfigscheibe und der Kugeln, und

Fig. 4 eine teilweise geschnittene Seitenansicht einer Antriebsvorrichtung zur Verstellung einer Meßschiene, die das erfindungsgemässe Wendegetriebe beinhaltet.

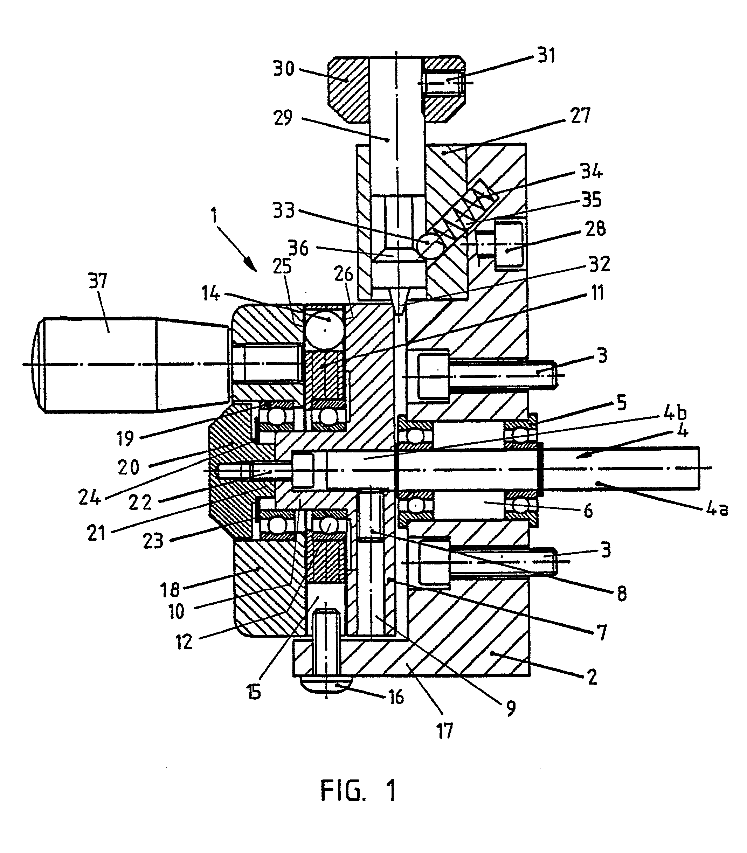

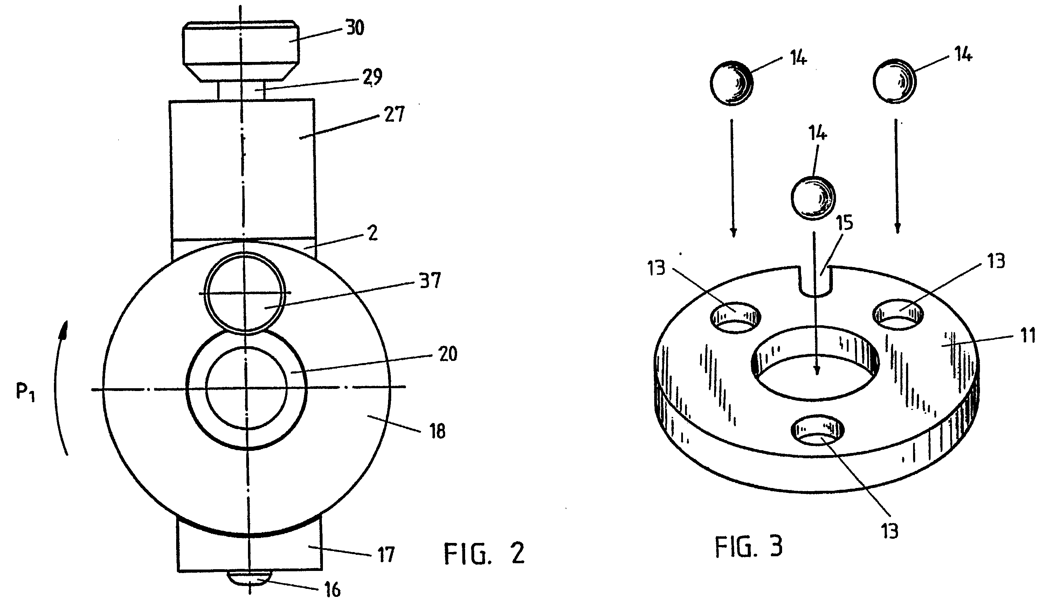

Gemäss Fig. 1 und 2 weist das gesamthaft mit 1 bezeichnete Reibungs-Wendegetriebe ein Getriebegehäuse 2 auf, welches z.B. mit Schrauben 3 an einer nicht dargestellten Vorrichtung befestigt werden kann. Im Gehäuse 2 ist eine Abtriebswelle 4 drehbar gelagert, und zwar mit Hilfe von zwei Kugellagern 5, die im Abstand zueinander in einer Bohrung 6 des Getriebegehäusekörpers 2 aufgenommen sind. Während das eine Ende 4a der Welle 4 aus dem Getriebegehäuse 2 herausragt und dazu bestimmt ist, mit einer weiteren Vorrichtung gekoppelt zu werden, trägt das andere freie Ende 4b der Welle 4 ein Abtriebsglied 7. Dieses ist drehfest mit der Welle 4 verbunden und mittels einer Stellschraube 8, die in eine radiale Gewindebohrung 9 des Abtriebsgliedes 7 eingeschraubt ist, gegen Verdrehung gesichert.

Das Abtriebsglied 7 besitzt generell die Gestalt einer kreisrunden Scheibe und ist mit einem zentralen, nabenartigen Fortsatz 10 versehen, der sich auf der den Kugellagern 5 abgewandten Seite von der Stirnfläche der Scheibe weg erstreckt. Auf dem Fortsatz 10 ist ein Kugelkäfig in der Gestalt einer runden Käfigscheibe 11 mittels eines Kugellagers 12 drehbar gelagert.

Wie insbesondere aus der Fig. 3 deutlich zu sehen ist, besitzt die Käfigscheibe 11 drei gleichmässig über den Umfang verteilt angeordnete, achsparallele Bohrungen 13, die in der Nähe der Peripherie der Scheibe 11 liegen. Diese Bohrungen 13 nehmen Kugeln 14 auf, die sich auf dem An- und Abtriebsglied 18 bzw. 7 abwälzen, wie noch eingehender zu erläutern sein wird. Die Bohrungen 13 entsprechen im Durchmesser etwa demjenigen der Kugeln 14 bzw. sind geringfügig grösser, so dass sich die Kugeln 14 frei in den Bohrungen 13 bewegen können. Die Dicke der Scheibe 11 ist etwas geringer als der Durchmesser der Kugeln 14, damit diese beidseitig etwas über die Oberflächen der Scheibe 11 hervortreten. Die Scheibe 11 ist zweckmässigerweise aus einem Kunststoffmaterial gefertigt, das gegenüber poliertem Stahl einen geringen Reibungskoeffizienten besitzt, und als Kugeln 14 können ganz normale, auf dem freien Markt erhältliche Kugellager-Kugeln verwendet werden.

Die Scheibe 11 besitzt ferner eine periphere Kerbe 15; in diese greift ein Sperrzapfen 16 ein, der an einem Fortsatz 17 des Getriebegehäuses 2 angebracht ist und die Scheibe 11 an einer Rotation hindert. Mit anderen Worten heisst dies, dass die Scheibe 11 stillsteht, wenn sich die Welle 4 und damit das Abtriebsglied 7 dreht.

Auf dem Fortsatz 10 ist ferner ein Antriebsglied 18 gelagert, und zwar mittels eines Kugellagers 19, das in einer zentralen Bohrung des generell scheibenförmigen Antriebsgliedes 18 aufgenommen ist. Der innere Laufring des Kugellagers 19 ist im Schiebesitz auf den Fortsatz 10 aufgepasst, so dass sich das Antriebsglied 18 in axialer Richtung verschieben lässt. Zum Halten des Antriebsgliedes 18 ist eine Befestigungsscheibe 20 vorgesehen, deren Aussendurchmesser etwas geringer ist als der Durchmesser der zentralen Bohrung im Antriebsglied 18 und die einen gegen den Fortsatz 10 des Abtriebsgliedes 7 gerichteten Forsatz 21 besitzt. Die Befestigungsscheibe 20 wird mittels einer Schraube 22 drehfest mit dem Fortsatz 10 des Abtriebsgliedes 7 verbunden.

Auf den Fortsatz 21 der Befestigungsscheibe 20 ist eine Tellerfeder (elastisches Anpressorgan) 23 aufgeschoben, die entlang ihres inneren Randes gegen eine Schulter 24 an der Basis des Fortsatzes 21 anliegt. Der äussere Rand der Tellerfeder 23 liegt gegen die über den Fortsatz 10 hervorstehende Kante des inneren Laufringes des Kugellagers 19 an.

Die beiden gegeneinander gerichteten Flächen des An- und Abtriebsgliedes 18 bzw. 7 besitzen Triebflächen, d.h. plan bearbeitete, achsnormal verlaufende Oberflächenbereiche 25 und 26, auf denen sich die Kugeln 14 abwälzen. Die Oberflächenbereiche 25 und 26 haben im allgemeinen die Gestalt einer Kreisringfläche, die plan geschliffen und gegebenenfalls gehärtet und poliert ist. Die Anordnung ist dabei so getroffen bzw. die Abmessungen der einzelnen Teile sind dabei so gewählt, dass in zusammengebautem Zustand des Getriebes 1, wie es in Fig. 1 dargestellt ist, die Tellerfeder 23 unter Vorspannung steht, so dass auf den inneren Laufring des Kugellagers 19 und damit auf das Antriebsglied 18 eine axial gerichtete Kraft gegen das Abtriebsglied 7 hin ausgeübt wird, mit dem Resultat, dass die Kugeln 14 satt auf den Oberflächenbereichen 25 und 26 aufliegen.

Am oberen Teil des Getriebegehäuses 2 ist eine Büchse 25 angebracht, z.B. mit Hilfe von Schrauben 28, welche eine Treibspindel 29 aufnimmt. Letztere besitzt einen Betätigungsknopf 30, der mit Hilfe einer Stellschraube 31 drehfest montiert ist, und ist drehbar sowie in axialer Richtung verschiebbar gelagert. Die Spitze 32 der Treibspindel 29 ist konisch verjüngt und liegt bei eingekuppelter Spindel, wie in Fig. 1 gezeigt, gegen eine Aussenkante des Abtriebsgliedes 7 auf. Eine Kügel 33, die in einer schräg zur Achse der Treibspindel 29 verlaufenden Sackbohrung 35 aufgenommen ist und unter Wirkung einer Druckfeder 34 steht, liegt gegen einen kegelmantelförmigen Abschnitt 36 der Treibspindel 29 an und presst dabei die Spitze 32 gegen die äussere Umfangskante des Abtriebsgliedes 7. Die Treibspindel 29 kann ausgekuppelt werden, indem der Betätigungsknopf 30 gegen oben gezogen wird, so dass die Spitze 32 die äussere Umfangskante des Abtriebsgliedes 7 freigibt.

Die Funktionsweise des Wendegetriebes ist wie folgt: Es wird angenommen, dass die Treibspindel 29 zunächst ausgekoppelt sei. Das Antriebsglied 18 wird mit Hilfe eines exzentrisch angebrachten Betätigungszapfens 37 in Drehung versetzt, und zwar in Richtung des Pfeiles $P_1$ in Fig. 2. Da das Antriebsglied 18 mittels der Tellerfeder 23 an die Kugeln 14 angepresst wird, werden die Kugeln 14 um eine radial verlaufende (imaginäre) Achse in Rotation versetzt, indem sie sich auf dem Triebflächenabschnitt 25 des Antriebsgliedes 18 abwälzen. Die Käfigscheibe 11 dreht sich nicht, da sie vom Sperrstift 16, der in die Kerbe 15 eingreift, daran gehindert wird. Die vom Antriebsglied 18 angetriebenen, rotierenden Kugeln 14 wälzen sich mit ihrer gegenüberliegenden Seite auf der Triebfläche 26 des Abtriebsgliedes 7 ab und treiben dieses zu einer Drehbewegung an, deren Drehsinn dem Pfeil $P_1$ entgegengesetzt ist. Damit wird die drehfest mit dem Abtriebsglied 7 verbundene Welle 4 ebenfalls in Rotation versetzt.

Zum direkten, untersetzten Antrieb des Abtriebsgliedes 7 wird die Treibspindel 29 in ihre in Fig. 1 gezeigte, eingekuppelte Lage gebracht, in der ihre Spitze 32 unter Wirkung der federbelasteten Kugel 33 gegen die äussere Umfangskante des Abtriebsgliedes 7 aufliegt. Wenn nun der Betätigungsknopf 30 gedreht wird, wälzt sich die Mantelfläche der konischen Spitze 32 entlang der äusseren Kante des Abtriebsgliedes 7 ab und versetzt dieses in Rotation. Durch den Durchmesserunterschied (geringer wirksamer Durchmesser der konischen Spitze 32 und grosser Durchmesser der äusseren Kante des Abtriebsgliedes 7) ergibt sich eine starke Untersetzung, so dass sich das Abtriebsglied bezüglich seiner Drehlage sehr fein verstellen lässt.

Durch die Wirkung der Tellerfeder 23, welche das Antriebsglied 18 gegen die Kugeln 14 und diese gegen das Abtriebsglied 7 presst, wird jedes Spiel aufgehoben, bei trotzdem leichtem Lauf, da die Kugeln 14 in der Käfigscheibe 11 nur eine vernachlässigbar geringe Reibung haben und sich im übrigen auf den Triebflächenabschnitten 25 und 26 praktisch reibungsfrei abwälzen. Eine Schmierung zwischen den Kugeln 14 und den Triebflächenabschnitten 25 und 26 bzw. der Käfigscheibe 11 ist nicht erforderlich, so dass ein praktisch wartungsfreier, präziser Betrieb des Getriebes während längerer Zeit gewährleistet ist. Die Kugeln 14 als Momentübertragungselemente benötigen keine separate, aufwendige Lagerung ausser dem einfachen und billigen Kunststoffkäfig, und für die Kugellager können standardisierte, preiswerte Lagetypen verwendet werden. Insgesamt ist das erfindungsgemässe Getriebe daher sehr einfach aufgebaut und kostengünstig herstellbar, ohne dass bezüglich der Präzision Kompromisse eingegangen werden müssten.

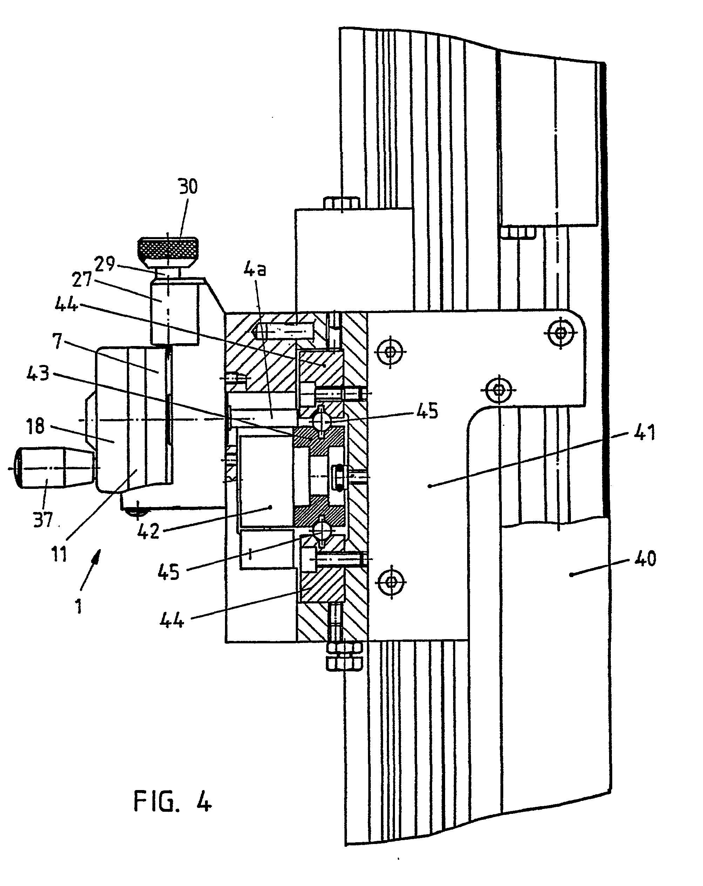

In der Fig. 4 ist ein Anwendungsbeispiel für das erfindungsgemässe Präzisions-Wendegetriebe gezeigt, und zwar in einer Antriebsvorrichtung für das Verstellen einer linear verschiebbaren Meßschiene. An einer Säule 40 ist ein Schlitten 41 verschiebbar gelagert, der durch nicht dargestellte Mittel in der Höhe verstellt werden kann. Der Schlitten trägt eine im Schnitt dargestellte Meßschiene 42, die senkrecht zur Zeichnungsebene linear verschiebbar ist. Zur Führung der Meßschiene 42 ist eine daran befestigte, bewegliche Führungsschiene 43 vorgesehen, die mittels Kugeln 45 in stationären Führungsschienen 44 gelagert ist. Solche Kugellinearführungen sind bekannt und brauchen hier nicht näher erläutert zu werden.

Aus konstruktiv vorgegebenen Gründen kann der Reibungsantrieb, gebildet durch das Wellenende 4a, nur an der oberen Kante der beweglichen Führungsschiene 43 angreifen, so dass sich eine unlogische, gefühlsmässig als falsch empfundene Verstellweise der Meßschiene 42 ergeben würde. Bei Rotation der Welle 4a im Uhrzeigersinn verschiebt sich nämlich die Meßschiene 42 nach links, und umgekehrt.

Hier schafft das erfindungsgemässe Wendegetriebe 1 Abhilfe. Wenn das Antriebsglied 18 mit Hilfe des Betätigungszapfens 37 im Uhrzeigersinn in Drehung versetzt wird, wird das Abtriebsglied 7 und damit die Welle 4a im Gegenuhrzeigersinn rotieren, so dass die Meßschiene 42 (gefühlsmässig richtig) nach rechts verstellt wird. Zur Grobverstellung wird dabei die Treibspindel 29 durch Herausziehen des Betätigungsknopfes 30 ausgekuppelt, bis die Meßschiene 42 eine angenäherte Sollposition erreicht hat. Dann kann der Betätigungsknopf 30 hineingedrückt werden, so dass die konische Spitze 32 der Treibspindel 29 mit der äusseren Umfangskante des Abtriebsgliedes 7 in Anlage gelangt. Durch anschliessendes Drehen des Betätigungsknopfes 30 im Uhrzeigersinn wird sich die Meßschiene 42 im Kriechgang ebenfalls nach rechts bewegen, da durch das Zusammenwirken Treibspindel-Abtriebsglied wiederum eine Drehsinnumkehr stattfindet. Durch seine Spielfreiheit und Reibungsarmut ist das erfindungsgemässe Wendegetriebe besonders für einen solchen Verstellantrieb geeignet, zumal die zu übertragenden Momente vergleichsweise gering sind.

**Patentansprüche**

1. Spielfreies, umschaltbares Reibungswendegetriebe, mit einem drehbar gelagerten Antriebsglied (18) und einem koaxial angeordneten, drehbar gelagerten Abtriebsglied (7), welche gegeneinander gerichtete, im Abstand zueinander angeordnete, achsnormale Triebflächen (25, 26) aufweisen, zwischen denen mindestens zwei käfiggeführte, sich auf den Triebflächen abwälzende Kugeln (14) angeordnet sind, wobei mindestens das eine dieser Glieder (18, 7) gegenüber dem anderen in Axialrichtung verschiebbar ist und unter Wirkung eines elastischen Anpressorganes (23) steht, welches die beiden Glieder (18, 7) gegeneinander zu verschieben bestrebt ist, dadurch gekennzeichnet, dass das Antriebsglied (18) mit einem exzentrisch angeordneten, vorstehenden Betätigungszapfen (37) für die manuelle Rotation des Antriebsgliedes (18) versehen ist, und dass zum direkten, untersetzten Antrieb des Abtriebsgliedes (7) eine wahlweise ein- und auskuppelbare, drehbar gelagerte Treibspindel (29) mit konischer Spitze (32) vorgesehen ist, welche mit einer äusseren Kante des Abtriebsgliedes (7) in Reibschlussverbindung bringbar ist.

2. Reibungswendegetriebe nach Patentanspruch 1, dadurch gekennzeichnet, dass die ein- und auskuppelbare Treibspindel (29) senkrecht zur Achse des Wendegetriebes (1) und in Richtung ihrer Achse verschiebbar gelagert ist.

3. Reibungswendegetriebe nach Patentanspruch 1 oder 2, dadurch gekennzeichnet, dass die Treibspindel (29) in eingekuppelter Lage unter Wirkung einer Feder (34) steht, welche die konische Spitze (32) gegen das Abtriebsglied (7) presst.

4. Reibungswendegetriebe nach Patentanspruch 1, dadurch gekennzeichnet, dass das Abtriebsglied (7) einen gegen das Antriebsglied (18) gerichteten, zylindrischen Fortsatz (10) aufweist, auf welchem das Antriebsglied (18) drehbar und axialverschiebbar gelagert ist.

5. Reibungswendegetriebe nach einem der vorhergehenden Patentansprüche, dadurch gekennzeichnet, dass die drehbare Lagerung des Antriebsgliedes (18) mittels eines Kugellagers (19) erfolgt, dessen innerer Laufring mit Schiebesitz auf dem Fortsatz (10) aufgenommen ist und über dessen stirnseitiges Ende vorsteht, und dass eine drehfest mit dem Fortsatz (10) verbundene Befestigungsscheibe (20) vorgesehen ist, welche die Tellerfeder (23) randseitig gegen die vorstehende Kante des inneren Laufrings des Kugellagers (19) presst.

6. Reibungswendegetriebe nach einem der vorhergehenden Patentansprüche, dadurch gekennzeichnet, dass drei Kugeln (14) vorgesehen sind, welche in drei gleichmässig über den Umfang der Käfigscheibe (11) verteilt angeordneten Bohrungen (13) des Käfigs frei beweglich aufgenommen sind.

7. Reibungswendegetriebe nach einem der vorhergehenden Patentansprüche, dadurch gekennzeichnet, dass die Käfigscheibe (11) mittels eines Kugellagers (12) axial unverschiebbar in geringem Abstand von der Triebfläche (26) des Abtriebsgliedes (7) gelagert ist.

**Revendications**

1. Dispositif tournant de renversement de marche à friction sans jeu, ayant un élément d'entraînement (18) monté tournant et un élément mené (7) monté tournant disposé coaxialement, qui présentent des surfaces d'entrainement (25, 26) se faisant face, montées à distance l'une de l'autre normalement à l'axe, entre lesquelles sont disposées au moins deux billes (14) guidées en cage, roulant sur les surfaces d'entraînement, l'un au moins de ces éléments (18, 7) étant mobile vis-à-vis de l'autre dans le sens axial et se trouvant sous l'effet d'un organe de pression élastique (23), lequel tend à pousser les deux éléments (18, 7) l'un contre l'autre, caractérisé par le fait que l'élément d'entraînement (18) est muni d'un tourillon de manœuvre (37) en saillie, disposé en excentrique, pour la rotation manuelle de l'élément d'entraînement (18) et que, pour l'entraînement direct et démultiplié de l'élément moteur (7) il est prévu une broche motrice (29) à pointe conique (32), montée tournante, embrayable et débrayable à volonté, que l'on peut amener en relation de frottement avec un bord extérieur de l'élément mené (7).

2. Dispositif de renversement de marche à friction selon revendication 1, caractérisé par le fait que la broche motrice (29), embrayable et débrayable, est montée perpendiculairement à l'axe du dispositif de renversement de marche (1) et est mobile dans le sens de son axe.

3. Dispositif de renversement de marche à friction selon revendication 1 ou 2, caractérisé par le fait que, en sa position embrayée, la broche motrice (29) est soumise à l'action d'un ressort (34) qui presse la pointe (32) contre l'élément mené (7).

4. Dispositif de renversement de marche à friction selon revendication 1, caractérisé par le fait que l'élément mené (7) présente un prolongement cylindrique (10) tourné vers l'élément d'entraînement (18), sur lequel est monté tournant et mobile axialement l'élément d'entraînement (18).

5. Dispositif de renversement de marche à friction selon l'une des revendications précédentes, caractérisé par le fait que le montage tournant de l'élément d'entraînement (18) se fait au moyen d'un roulement à billes (19), dont la bague de roulement interne est montée sur le prolongement (10) en ajustement glissant et fait saillie sur la face antérieure de celui-ci et qu'il est prévu un disque de fixation (20), lié sans rotation au prolongement (10), qui pousse la rondelle-ressort (23) contre le bord en saillie de la bague de roulement interne du roulement à billes (19).

6. Dispositif de renversement de marche à friction selon l'une des revendications précédentes, caractérisé par le fait qu'il est prévu trois billes (14), logées dans trois perçages (13) de la cage répartis régulièrement sur le pourtour du disque-cage (11) et dans lesquels elles peuvent se mouvoir librement.

7. Dispositif de renversement de marche à friction selon l'une des revendications précédentes, caractérisé par le fait que le disque-cage (11) est monté au moyen d'un roulement à billes (12) mobile axialement à faible distance de la surface d'entraînement (26) de l'élément mené (7).

**Claims**

1. Backlash-free, switchable friction reverse gearing including a rotatably mounted drive member (18) and a coaxially disposed, rotatably mounted output member (7) with axis-normal drive surfaces (25, 26) positioned opposite to and at a distance from each other and having between them at least two caged balls (14) which roll on the drive surfaces whereby at least one of these members (18, 7) is movable in the axial direction in relation to the other member and is affected by an elastic pressure member (23) which aims to slide the two members (18, 7) against each other, characterised in that the drive member (18) is provided with an eccentrically positioned protruding operating pin (37) for manual rotation of the drive member (18); and that for direct reduced drive of the output member (7) an either engageable or disengageable, rotatably mounted drive spindle (29) with conical point (32) is provided which can be brought into frictional contact with an exterior edge of the output member (7).

2. Friction reverse gearing according to patent claim 1, characterised in that the engageable and disengageable drive spindle (29) is mounted perpendicularly to the axis of the reverse gearing (1) and movable in the direction of its axis.

3. Friction reverse gearing according to patent claim 1 or 2, characterised in that the drive spindle (29) when engaged stands under the influence of a spring (34) which presses the conical point (32) against the output member (7).

4. Friction reverse gearing according to patent claim 1, characterised in that the output member (7) has a cylindrical extension (10) facing the drive member (18) onto which extension the drive member (18) is mounted to be rotatable and axially movable.

5. Friction reverse gearing according to one of the preceding patent claims, characterised in that the rotatable mounting of the drive member (18) is achieved by way of a ball bearing (19) its inner race being disposed on the extension (10) with sliding seat to protrude beyond the end face of said extension; and that a mounting disc (20), torsionally fixed to the extension (10), is provided which presses the plate spring (23) at the edge against the protruding edge of the inner race of the ball bearing (19).

6. Friction reverse gearing according to one of the preceding patent claims, characterised in that three balls (14) are provided which are disposed freely movable in three holes (13) evenly spaced out over the circumference of the cage disc (11).

7. Friction reverse gearing according to one of the preceding patent claims, characterised in that the cage disc (11) is positioned axially immovable at a close distance from the drive surface (26) of the output member (27) by way of a ball bearing (12).

FIG. 1

FIG. 3

FIG. 2

FIG. 4